Europäisches Patentamt

European Patent Office

Office européen des brevets

(19)

(11) Publication number: **0 208 240**
**B1**

(12) # EUROPEAN PATENT SPECIFICATION

(45) Date of publication of patent specification: **28.03.90**

(21) Application number: **86108963.9**

(22) Date of filing: **02.07.86**

(51) Int. Cl.⁵: **B 29 C 47/88,** B 29 C 41/30,
B 29 D 7/01, B 31 B 1/90 //
B29K23/00, B29L7/00

(54) **Method and apparatus for extruding a fastening profile onto a travelling film web.**

(30) Priority: **09.07.85 US 753191**

(43) Date of publication of application:
**14.01.87 Bulletin 87/03**

(45) Publication of the grant of the patent:
**28.03.90 Bulletin 90/13**

(84) Designated Contracting States:
**AT BE CH DE FR GB IT LI LU NL SE**

(56) References cited:
**EP-A-0 023 817**
**EP-A-0 103 244**
**DE-B-2 163 930**
**US-A-3 945 872**
**US-A-4 279 677**

(73) Proprietor: **DowBrands Inc.**
**9550 Zionsville Road**
**Indianapolis Indiana 46268 (US)**

(72) Inventor: **Beyer, Carlton E.**
**2007 Sylvan**
**Midland Michigan 48640 (US)**
Inventor: **Wagers, Kevin J.**
**1901 Wilmington Drive**
**Midland Michigan 48640 (US)**
Inventor: **Slater, Linda M.**
**2572 Lakeview Drive**
**Sanford Michigan 48657 (US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2 (DE)**

Courier Press, Leamington Spa, England.

## Description

This invention relates to a method and an apparatus for securing a plastic fastening profile to a travelling plastic film web according to the preambles of claims 1 and 6. Such a method and such an apparatus is known from US—A—3945872. The invention is especially useful for producing reclosable plastic bags.

Plastic containers which feature reclosable fasteners are well known and widely used by consumers and industry. Because of the popularity of such reclosable plastic containers, a number of different manufacturing processes and apparatuses have been developed to manufacture them. A major consideration in almost all of these prior art manufacturing processes and apparatuses has been the manner in which the fastener or closure profiles are attached to the container walls.

One approach is described by Naito, U.S. Patent No. Re 29,208, is to form both the tubular film and fastener elements integrally utilizing a single blown film die. However, as pointed out by Behr, U.S. Patent No. 3,848,035, such an integral extrusion process is extremely difficult to carry out.

Another technique taught by Sutrina et al., U.S. Patent No. 4,263,079, is to place a fastener die in a very close relationship to a film extrusion die and coextrude both the fastener and film. Adhesion of the fastener to the film occurs before any significant cooling of either the film or fastener. However, the cooling water which is typically utilized to cool down the hot fastener profiles may cause undesirable wrinkling or puckering of a coextruded hot film unless the amount of cooling water is carefully controlled.

Some prior art processes have utilized localized heating or hot-melt adhesives to secure fastener profiles to a film substrate. For example, Ausnit, U.S. Patent No. 4,101,355, teaches two different methods for applying preformed fastener strips to plastic film substrates. In one method, a hot-melt adhesive is extruded between the preformed fastener strip and travelling plastic film. A second method utilized electric welding to heat a localized area and adhere the strip to the travelling film.

Others have utilized various combinations of casting film onto preformed fastener strips or extruding hot fastener strips onto a preformed travelling film. For example, Kamp, U.S. Patent No. 4,306,924, teaches a process for casting a plastic film onto preformed fastener strips which have been preheated. Urehara, Japanese Kokai 1424/66, teaches extruding a fastener profile and applying it to a moving web or sheet while the fastener is still hot but does not disclose any specific apparatus or process parameters for accomplishing adherence of the profile to the sheet; moreover, Urehara is silent concerning the temperature of the web or sheet.

Other more recent processes in this art have taught the necessity of having both the fastener and film heated to achieve a permanent joining together of those elements. For example, Noguchi, U.S. Patent No. 3,904,468, teaches a method in which fastener strips are freshly extruded onto a heated film and pressed into the film with nip rolls. Goto, U.S. Patent No. 3,462,332 extrudes hot fastener strips onto a hot, freshly cast film. Takahashi, U.S. Patent No. 4,279,677, teaches joining a freshly extruded fastener profile to a preheated film web. Herrington, U.S. Patent No. 4,419,159, extrudes a fastener onto a heated travelling film web.

Finally Takahashi Noguchi, U.S. Patent No. 3,945,872 discloses a method and apparatus for joining a freshly extruded profile to a film using press rolls, the film in said process being preferably heated such as by passing over a heated press roll.

However, all of these prior art references present problems in manufacturing, such as twisting or distortion of fastener strips, positioning of the fasteners, the need to preheat the fasteners and/or web, or other problems which reduce manufacturing speed and efficiency or otherwise increase manufacturing costs. Accordingly, the need still exists in the art for an improved process and apparatus for securing extruded fastener profiles to a travelling film web.

The present invention provides a method and apparatus for securing a plastic fastener profile to a travelling plastic film web. It may also be used to apply profiles to sheet materials as well. As used in this invention, the term plastic fastener profile includes both the male or rib profile and the female or groove profile which, when pressed together, form a seal on a reclosable plastic container as is conventional in this art. Thus, the present invention secures either a rib or groove fastener profile, or optionally, both a rib and a groove fastener profile simultaneously, to a travelling plastic film web.

In accordance with the present invention, a preformed film web is made to travel a course through a joining area at ambient temperature as is set out in method claim and corresponding subclaims 2 to 5.

In one aspect of the invention a plastic fastener profile is extruded and guided into convergence with the travelling film web, the freshly extruded fastener and the film web being joined together in an area in which the film is insulated, the joining area on the film being located in the gap between a pair of rolls over which the film is made to travel.

In another aspect of the invention the freshly extruded profile and the film web are joined together in an area in which the film web travels over an insulated roll. In all aspects of the invention only the heat from the fastener profile is used to fuse the surface of the film web and secure the profile to the web, and the joining is affected only by the heat of the freshly extruded profile without the aid of pressure rolls.

The joining area utilized in the practice of the present invention may comprise the gap between a pair of rolls over which the film web is made to travel (i.e., the area between a pair rolls from the point where the web loses contact with the first roll to the point where the web regains contact with the second roll). Air at ambient temperature is maintained behind the travelling web on the side opposite the side of the web which is joined to the fastener profile. Surprisingly, it has been discovered that the ambient air acts to insulate the travelling web and permits the hot extruded fastener profile to heat the surface of the web sufficiently to cause fusion of the web to the profile. Previous processes in this art utilized heated webs (either directly after a casting or extrusion step or preheated) in the belief that the heat from a fastener profile alone was insufficient to effect a secure joinder of the profile and web. Indeed, it is believed that joinder of profile and web on a surface of a standard uninsulated metal roll or other uninsulated surface is ineffective to cause a secure joinder because the uninsulated surface acts as a heat sink and draws heat away from the profile too quickly.

On the other hand, if an insulated roll or other surface is utilized, joinder in accordance with the process of the present invention may be accomplished. Again, use of an insulated roll or surface permits the hot extruded fastener profile to heat the surface of the travelling web sufficiently to cause fusion of the web to the profile. The practice of the present invention permits the utilization of a preformed film web and eliminates the need to preheat such a film web to effect joinder of the profile and web. Actually, in some instances it may be desirable to cool either the profile or the film web prior to joinder. Thus, when a very thick based profile is extruded that base may carry more residual heat than desired. In that instance, cooling may be used in conjunction with the insulation feature of the present invention to achieve the desired joining temperature.

The invention also is concerned with an apparatus for securing a plastic fastener profile on a travelling plastic film web. Different types of the apparatus according to the invention are specified in claim 7. Sub-claim 7 is related to a special embodiment of such an apparatus. The apparatus according to the invention all comprise

a) means for moving a web or film,

b) means located adjacent the moving web for extruding a fastener profile,

c) means for guiding the profile into convergence with the moving film or web in a joining area,

d) means for cooling the profile.

Said joining area is located either in the gap between a pair of rolls over which the film is made to travel, the joining area being insulated by air at ambient temperature which contacts the moving web opposite the surface which joins with the profile, the air acting to insulate the moving web for a time sufficient to permit the heat from the profile to fuse the surface of the film and secure the profile to the web without the aid of pressure rolls;

or the joining area for attaching the freshly extruded, hot profile to the web is located adjacent one of a pair of spaced rollers over which the film web is made to travel, the profile is being attached to the web without any substantial contact with the peripheral surface of the roller for conveying the web, and the profile is secured to the web without the aid of pressure rolls;

or the joining area for attaching the freshly extruded, hot profile to the web is located over an insulated roll, over which the film is made to travel.

The invention is further illustrated in the accompanying drawings wherein:

Figure 1 is a perspective view of the apparatus of one embodiment of the present invention;

Figure 2 is a diagrammatic cross section of the embodiment shown in Figure 1; and

Figure 3 is a diagrammatic cross section of an alternative embodiment of the present invention.

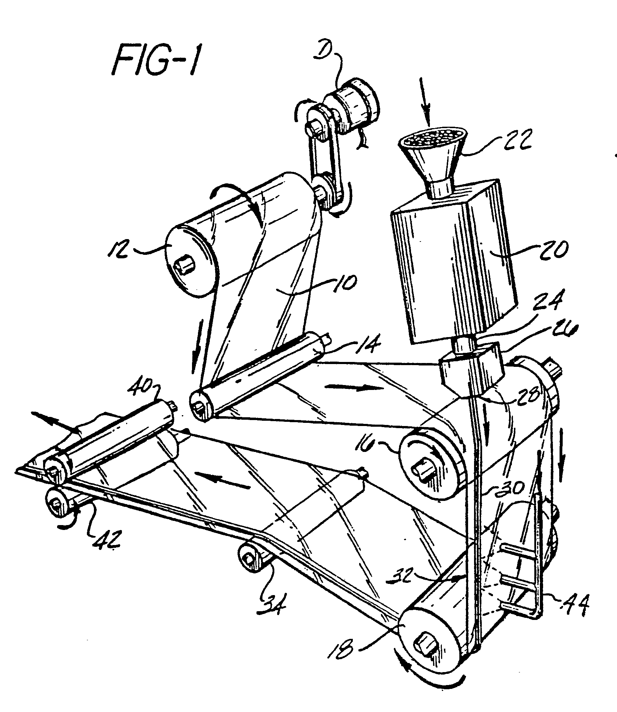

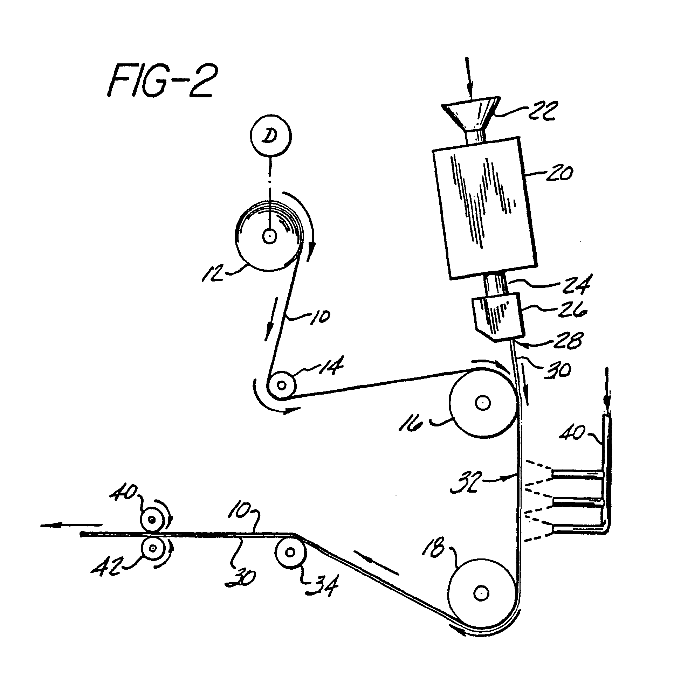

With reference to Figures 1 and 2, in one embodiment of the apparatus of the present invention, a preformed continuous film web 10 is taken off unwind roll 12. Unwind roll 12 has tension control which may be effected, for example, through drive means D connected to unwind roll 12 through belt 11 and shaft 13. This provides the proper tension for web 10 as it passes through the apparatus.

Web 10 is then directed around idler roll 14 and onto driven rolls 16 and 18. Rolls 16 and 18 are at ambient temperature, although roll 18 may optionally be chilled as explained in greater detail below.

Also as shown in Figure 1, a conventional screw extruder 20 is fed plastic resin through inlet 22. After melt processing occurs in extruder 20, the molten plastic resin is sent through pipe 24 to fastener die block 26. Although only a single die block is illustrated, it will be appreciated that a plurality of die blocks may be utilized and spaced across the width of web 10 so that a plurality of fastener profiles may be extruded simultaneously onto the web. Likewise, fastener die block 26 may be configured to extrude either a rib element or a groove element from its outlet 28 onto web 10.

For simplicity and ease of understanding, the fastener profile extruded from die block 26 will be referenced by drawing numeral 30, and it will be understood that fastener profile 30 may be either a rib or a groove element. As shown, profile 30 is guided into convergence with web 10 at a point where web 10 is just leaving the surface of roll 16. This joining area, which is generally indicated by reference numeral 32 is in the gap between rolls 16 and 18. In this manner, the joinder of profile 30 to web 10 occurs in area 32 in which web 10 is not in contact with, or only momentarily in contact with, an underlying roll. As explained in further detail below, extruder 20 and die block 26 may be offset from vertical by a small angle to better tension the extruded profile as it is guided into convergence with web 10.

It has been found that the heat transfer which takes place from a hot extruded profile through the web to an underlying uninsulated roll surface causes the profile to cool too quickly for the profile to be secured to the web. Surprisingly, it has been found that if the hot profile and web are joined together in an area in which the film is insulated, either by being surrounded by ambient air or by being in contact with an insulated surface, the residual heat from the extruded profile is sufficient to fuse the surface of the web and secure the profile to the web.

In some instances, as mentioned, the residual heat in the extruded profile may be more than desirable. This may occur with profiles having very thick bases, having greater amounts of extruded material, or having adjoining ribs as in European Patent Application 0,114,373 published August 1, 1984. When too much heat is present cooling elements may be used to remove some of that heat from the profile prior to joining in the insulated joining area.

After joinder of profile 30 with web 10, the assembly travels over roll 18, around idler roll 34, and is passed between driven nip rolls 40, 42 to a tension controlled winder (not shown). Roll 18 may be at ambient temperature, or optionally, may be chilled to cool the profile assembly as required. Additionally, water jets 44 may be positioned as needed to spray cooling water on the profile and web assembly either in the gap between rolls 16, 18 or on roll 18.

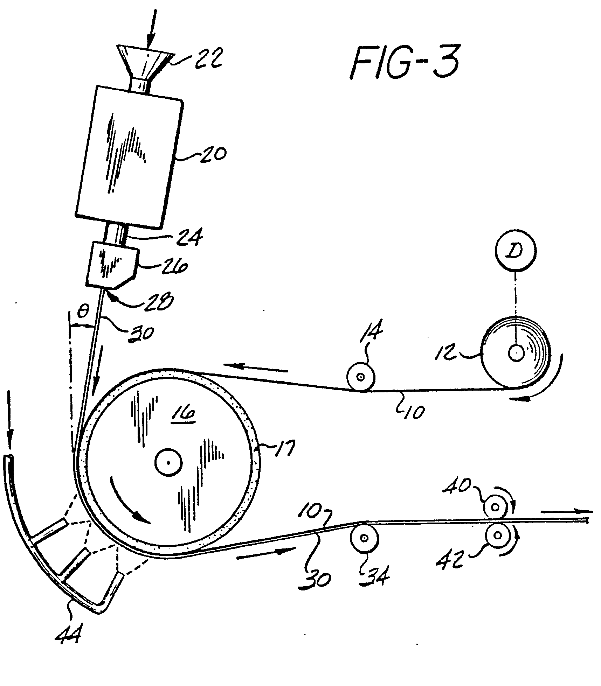

An alternative embodiment of the invention is illustrated in Figure 3 where like elements are represented by like reference numerals. There, web 10 and profile 30 are joined together on roll 16 which has an insulated layer 17 thereon. Insulated layer 17 may be any suitable material which will prevent rapid heat transfer from profile 30 and web 10 to roll 16. For example, layer 17 may comprise a layer of polytetrafluoroethylene. The thickness of layer 17 may be varied to control, to some extent, the rate of heat transfer to and through web 10.

As illustrated in Figure 3, extruder 20 and die block 26 may be offset from vertical by any angle θ. This angle θ may be varied between about 0 and 35° and affects the amount of time profile 30 and web 10 are in contact with surface 17 of roll 16. It has been found that variation of the angle θ, by adjusting the position of die block outlet 28, may eliminate the trapping of air beneath the profile as it converges onto web 10. Additionally, by offseting die block 26 and outlet 28, the tension of profile 30 as it is drawn onto web 10 may be better controlled. Although die block 26 is illustrated as being vertically above web 10, it is within the scope of this invention to rearrange the relative spatial relationships between apparatus elements of the invention. However, the relative positioning of the die block and web should be such as to cause the extruded profile to be guided into convergence with the travelling web.

Because it is desired to utilize the heat from the freshly extruded fastener profile to fuse the surface of the web, the die block 26 and outlet 28 are positioned typically only about 4.0 to 7.0 inches (10.2 to 17.8 cm) from the point at which the profile is joined to the web.

The plastic resin utilized in the practice of the present invention is preferably polyethylene for both the film web and fastener profile. Additionally, the film web can be a laminate of a plurality of layers of different plastics so long as one of the outer face layers of the laminate is polyethylene. Typically, the thickness of the film web will be from 1.0 to 5.0 mils (.025 to .127 mm).

The melt temperatures in the extruder are generally between 182° and 216°C, and typically are about 204°C. The line speed of the profile and web are generally between about 100 to 370 feet (30.5 to 112.8 meters) per minute, and typically about 150 feet (45.7 meters) per minute.

The shape of the extruded profile may be any typical rib and/or groove profile utilized in the art. The fastener profiles utilized in the practice of the present invention should have bases of sufficient thickness to provide enough heat to fuse the surface of the film web. In practice, it has been determined that rib and groove elements having thicknesses of about 50 to 60 mils (1.27 to 1.5 mm) as extruded are of sufficient thickness to permit a secure joinder of profile to film web to occur. Post extrusion flow, shrinkage, and some drawing of the profiles as they are secured to the travelling film web result in final fastener base thicknesses of 0.015 to 0.020 inches (0.38 to 0.51 mm).

The invention may be more readily understood by reference to the following example.

Example

A zipper profile was extruded and secured to an underlying film web as follows. The zipper profile was formed from a low density polyethylene and was extruded from a 2½ inch (6.35 cm) extruder commercially available from Egan Machinery Co. The extrusion temperature was 204°C.

Heat from the freshly extruded zipper profile was used to fuse the profile to a three layer laminate film. The film laminate comprised a 0.0015 inch (.038 mm) thick layer of high density polyethylene, a 0.0003 inch (.0076 mm) thick layer of a modified polyethylene adhesive, and a 0.0004 inch (.0102 mm) thick layer of nylon-6. The zipper profile was fused to the high density polyethylene face of the film laminate. The film laminate web had a line speed of 150 feet (45.7 meters) per minute.

The extruder was positioned so that the drawdown distance, the distance from the outlet of the extruder to the point at which the zipper profile is joined to the film web, was 6.0 inches (15.24 cm). The outlet of the extruder was offset 9.5 degrees from vertical (angle θ). The process resulted in an assembly in which the zipper profile was secured to the film laminate.

While certain representative embodiments and details have been shown for purposes of illustrating the invention, it will be apparent to those skilled in the art that various changes in the methods and apparatus disclosed herein may be made without departing from the scope of the invention, which is defined in the appended claims.

## Claims

1. A method for securing a plastic fastening profile to a travelling plastic film web by extruding a fastener profile and guiding the profile into convergence with a preformed travelling web, the web being at ambient temperature, characterized by, joining the freshly extruded profile and film web together in an area in which the film web is insulated, utilizing only the heat from the fastener profile to fuse the surface of the film web and secure the profile to the web, the joining area on the film being located in the gap between a pair of rolls over which the film is made to travel, or in an area in which the film travels over an insulated roll the joining being affected exclusively by the heat of the freshly extruded profile without the aid of pressure rolls.

2. The method of claim 1, characterized in that, the joining area in the gap between a pair of rolls is insulated only by surrounding ambient air.

3. The method of claims 1 or 2, characterized in that, the profile is offset from the direction of travel of the web to provide tension on the profile as it is joined to the web.

4. The method of claims 1, 2 or 3 in which the web and profile are polyethylene.

5. The method of claims 1, 2, 3 or 4 characterized in that, the web is a laminate of a plurality of layers with the layer in direct contact to the profile being polyethylene.

6. Apparatus for securing a plastic fastening profile on a travelling plastic film web, the apparatus comprising
a) means for moving a web film
b) means located adjacent the moving web for extruding a fastener profile
c) means for guiding the profile into convergence with the moving web in a joining area,
d) means for cooling the profile characterized in that
said joining area is located in the gap between a pair of rolls over which the film web is made to travel, the joining area being insulated by air at ambient temperature which contacts the surface of the moving web opposite the surface which joins with the profile, or
said joining area for attaching the freshly extruded hot profile to the web is located adjacent to one of a pair of spaced rolls over which the film web is made to travel, the profile being attached to the film web without any substantial contact with the peripheral surface of the roll for conveying the web, or
said joining area is located over an insulated roll, over which the film web is made to travel, and the profile is secured to the web without the aid of pressure rolls.

7. The apparatus of claim 6, characterized in that, the means for cooling the profile include water jets.

## Patentansprüche

1. Verfahren zum Befestigen eines Kunststoffverschlußprofils auf einer sich bewegenden Kunststoffolienbahn durch Extrudieren eines Verschlußprofils und Zusammenführen des Profils mit einer vorgeformten, sich bewegenden Bahn, wobei sich die Bahn auf Umgebungstemperatur befindet, gekennzeichnet durch Zusammenfügen des frisch extrudierten Profils und der Folienbahn in einem Bereich, in dem die Folienbahn isoliert ist, ausschließliches Verwenden der Wärme des Verschlußprofils, um die Oberfläche der Folienbahn zu schmelzen und das Profil an der Bahn zu befestigen, wobei der Verbindungsbereich der Bahn sich in einem Spalt zwischen einem Walzenpaar befindet, über die die Bahn bewegt wird, oder in einem Bereich liegt, in dem die Bahn über eine isolierte Walze geführt wird, wobei das Verbinden ausschließlich durch die Wärme des frisch extrudierten Profils ohne Hilfe von Anpreßwalzen erfolgt.

2. Verfahren nach Anspruch 1, dadurch gekennzeichnet, daß der Verbindungsbereich in dem Spalt zwischen dem Walzenpaar nur durch die Umgebungsluft isoliert ist.

3. Verfahren nach Anspruch 1 oder 2, dadurch gekennzeichnet, daß das Profil aus der Bewegungsrichtung der Bahn versetzt wird, um das Profil unter Spannung zu setzen, während es mit der Bahn verbunden wird.

4. Verfahren nach Anspruch 1, 2 oder 3, dadurch gekennzeichnet, daß die Bahn und das Profil aus Polyethylen sind.

5. Verfahren nach Anspruch 1, 2, 3 oder 4, dadurch gekennzeichnet, daß die Bahn ein Laminat aus einer Vielzahl von Schichten ist, wobei die Schicht in direktem Kontakt mit dem Profil aus Polyethylen ist.

6. Vorrichtung zum Befestigen eines Kunststoffverschlußprofils auf einer sich bewegenden Kunststoffolienbahn, wobei die Vorrichtung enthält
a) Einrichtungen zum Bewegen der Folienbahn,
b) neben der sich bewegenden Bahn angeordnete Einrichtungen zum Extrudieren eines Verschlußprofils,
c) Einrichtungen zum Zusammenführen des Profils mit der sich bewegenden Bahn in einem Verbindungsbereich,
d) Einrichtungen zum Kühlen des Profils dadurch gekennzeichnet,
daß der Verbindungsbereich sich in einem Spalt zwischen einem Walzenpaar befindet, über die die Folienbahn bewegt wird, wobei der Verbindungsbereich durch die Umgebungsluft isoliert ist, die die Oberfläche der sich bewegenden Bahn berührt, die der Oberfläche, und der das Profil befestigt wird, gegenüberliegt, oder
daß der Verbindungsbereich zum Aufbringen des frisch extrudierten heißen Profils auf die Bahn neben einer Walze des einen Abstand voneinander aufweisenden Walzenpaares, über die die Folienbahn bewegt wird, angeordnet ist, wobei das Profil mit der Folienbahn verbunden wird

ohne wesentlichen Kontakt mit dem Außenumfang der die Bahn tragenden Walze, oder

daß der Verbindungsbereich über einer isolierten Walze, über die die Folienbahn bewegt wird, angeordnet ist, und wobei das Profil auf der Bahn ohne Hilfe von Anpreßwalzen befestigt wird.

7. Vorrichtung nach Anspruch 6, dadurch gekennzeichnet, daß die Einrichtungen zum Kühlen des Profils Wasserdüsen einschließen.

## Revendications

1. Procédé permettant de rendre un profilé de fermeture, en matière plastique, solidaire d'une nappe de film, en matière plastique, en mouvement, en extrudant un profilé de fermeture et en guidant ce profilé de façon qu'il vienne converger avec une nappe préformée en mouvement, cette nappe étant à la température ambiante, caractérisé en ce qu'on joint entre eux le profilé fraîchement extrudé et la nappe de film, ou bien dans une zone où la nappe de film est isolée, en n'utilisant que la chaleur provenant du profilé de fermeture pour faire fondre la surface de la nappe de film et fixer le profilé sur cette nappe, la zone de jonction sur le film étant située dans l'espace séparant deux rouleaux sur lesquels on fait se déplacer le film, ou bien dans une zone où le film se déplace sur un rouleau isolé, la jonction étant effectuée exclusivement par la chaleur du profilé fraîchement extrudé, sans l'aide de rouleaux de pression.

2. Procédé suivant la revendication 1, caractérisé en ce que la zone de jonction située dans l'espace séparant deux rouleaux n'est isolée que par l'air ambiant environnant;

3. Procédé suivant l'une des revendications 1 et 2, caractérisé en ce que le profilé est décalé par rapport à la direction de déplacement de la nappe de façon à assurer une tension sur le profilé pendant qu'il est joint à la nappe.

4. Procédé suivant l'une des revendications 1 à 3, selon lequel la nappe et le profilé sont en polyéthylène.

5. Procédé suivant l'une des revendications 1 à 4, caractérisé en ce que la nappe est un stratifié de plusieurs couches, la couche qui est en contact direct avec le profilé étant en polyéthylène.

6. Appareil permettant de fixer un profilé de fermeture, en matière plastique, sur une nappe de film, en matière plastique, en déplacement, cet appareil comprenant:

a) des moyens servant à déplacer une nappe de film,

b) des moyens disposés au voisinage de la nappe en mouvement et servant à extruder un profilé de fixation,

c) des moyens servant à guider le profilé de façon qu'il converge avec la nappe en déplacement dans une zone de jonction,

d) des moyens servant à refroidir le profilé, caractérisé en ce que:

ou bien la zone de jonction est située dans l'espace séparant deux rouleaux sur lesquels on fait se déplacer le film, cette zone de jonction étant isolée par de l'air à la température ambiante qui est en contact avec la nappe en mouvement à l'opposé de la surface qui s'unit au profilé,

ou bien la zone de jonction servant à fixer le profilé chaud, fraîchement extrudé, sur la nappe est située au voisinage de l'un de deux rouleaux espacés par-dessus lesquels on fait se déplacer la nappe de film, le profilé se fixant sur la nappe sans aucun contact sensible avec la surface périphérique du rouleau servant à transporter cette nappe,

ou bien la zone de jonction est située sur un rouleau isolé sur lequel on fait se déplacer le film, et le profilé est rendu solidaire de la nappe sans l'aide de rouleaux de pression.

7. Appareil suivant la revendication 6, caractérisé en ce que les moyens permettant de refroidir le profilé comprennent des jets d'eau.

FIG-1

FIG-2

FIG-3